# FASCICULE DE BREVET EUROPEEN

(11) **EP 3 926 927 B1**
(45) Date de publication et mention de la délivrance du brevet: **16.10.2024**
(21) Numéro de dépôt: 20305663.5
(22) Date de dépôt: 17.06.2020
(51) Int. Cl.: H04W 4/38, H04W 4/70, H04L 67/12

(54) **PROCEDE DE COMMUNICATION ET OBJETS CONNECTES**
KOMMUNIKATIONSVERFAHREN UND DAMIT VERBUNDENE OBJEKTE
COMMUNICATION METHOD AND CONNECTED OBJECTS

(43) Date de publication de la demande: 22.12.2021
(73) Titulaire: BULL SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: IPAZ

(56) Documents cités:
- US-A1- 2008 092 638

## Description

L'invention s'intéresse au domaine des objets connectés, et plus particulièrement au domaine de la communication des objets connectés. L'invention concerne un procédé de communication mis en oeuvre par un objet connecté émetteur. L'invention concerne en outre un objet connecté émetteur.

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou loT) peut être regardé comme l'extension d'Internet à des éléments physiques.

L'internet des objets désigne l'ensemble des objets connectés à internet et correspond au domaine des Technologies de l'information et de la Communication (ou TIC) qui est en pleine expansion. Les dispositifs électroniques concernés par ces applications sont appelés des objets connectés, en ce sens qu'ils peuvent interagir au travers d'une pluralité de sous-réseaux locaux pouvant être connectés à un réseau central à haut débit comme l'Internet. Une définition de l'internet des objets est proposée dans l'ouvrage intitulé L'INTERNET DES OBJETS, de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Les usages des objets connectés sont très variés et peuvent aller du domaine de l'e-santé à celui de la domotique en passant par les téléphones mobiles. Les objets connectés envahissent un peu plus chaque jour notre quotidien et ils sont également impliqués dans le concept d'environnement intelligent et notamment de ville intelligente (ou « Smart City », en anglais), la surveillance (en anglais : « monitoring ») d'installations industrielles, les transports et la logistique, les voitures autonomes, l'agriculture, etc. En 2015, on comptait 4,9 milliards « objets connectés ». On parle de 25 à 150 milliards d'objets connectés en 2025. A cette croissance exponentielle, s'ajoute une très grande diversité des domaines d'applications : santé, transport, commerce, domotique...

Ce nombre et cette diversité constituent un vrai défi technique en particulier pour l'échange de données de l'ensemble de ces objets connectés. En effet, ces objets connectés peuvent communiquer à travers des sous-réseaux locaux ou encore être interconnectés entre eux grâce, par exemple, à l'Internet. Dans un grand nombre de cas, il est nécessaire de centraliser sur un ou plusieurs serveurs des données d'une famille d'objets connectés (plusieurs objets connectés appartenant à un même sous-réseau) afin de permettre par exemple de les consulter ou de déclencher des opérations de maintenance. Le volume de données échangées entre objets connectés et serveur(s) est alors également voué à augmenter de façon exponentielle.

En général, ces échanges ont souvent pour objet de donner l'état courant dans lequel se trouve l'objet connecté. Selon les cas, cela peut représenter des centaines voire des milliers de données qu'il faut régulièrement envoyer sur le serveur pour refléter l'état des différents capteurs, ressources etc... de l'objet connecté. Du fait du nombre de données et la fréquence des échanges cela peut rapidement représenter un volume de données conséquent d'autant plus que la famille d'objets connectés peut être très nombreuses (ex : des installations domotiques, des compteurs intelligents de type Linky).

En outre, lors des échanges entre objets connectés et serveur(s), l'objet connecté est sollicité par le serveur selon une fréquence prédéfinie ou de façon aléatoire afin de collecter les données des différents objets connectés. Par conséquent, plus le nombre d'objet connecté augmente plus les échanges de données entre objet connecté et serveur augmentent également. Ceci se traduit par une augmentation considérable du volume de données échangées sur les réseaux.

Ainsi, plus le nombre des d'objets connectés augmente plus la communication est chronophage et complexe. En outre, avec l'augmentation du volume de données le risque de surcharge ou de saturation du réseau, de mauvaise transmission ou d'absence de transmission des données ou encore de dysfonctionnement augmente également.

Par ailleurs, lors des communications entre objets connectés et serveur, il est nécessaire de réaliser une configuration du réseau permettant d'ouvrir l'accès au réseau local. Cette configuration est chronophage et fastidieuse. Par ailleurs, une telle configuration nécessite la mise en place d'échanges récurrents entre l'objet connecté et le serveur afin d'assurer d'une part la mise en place de la communication et d'autre part la continuité de la communication dans le temps.

Dans l'art antérieur il a été proposé des solutions et méthodes basées sur une initiative de l'objet connecté telles que : TACAS (pour Terminal Access Controller Access-Control Systems en terminologie anglosaxonne), TACAS Plus, RADIUS (pour Remote Authentication Dial-In User Service en terminologie anglosaxonne), IEEE 802.1 xPort-NAC (pour Network Access Control en terminologie anglosaxonne), basées sur une reconnaissance et une authentification pour l'accès réseau d'un équipement (i.e. objet connecté). Cependant, qu'il s'agisse de reconnaissance et/ou d'authentification, ceci entraine un nombre de données supplémentaires et donc augmente le volume desdites données et le nombre d'échange.

Par ailleurs, bien que ces méthodes puissent simplifier les communications, il reste toutefois nécessaire de configurer les équipements locaux pour indiquer par exemple comment contacter le serveur (IP, port, protocole etc...). Ceci traduit encore et toujours des nombreuses données à échanger.

US 2008/092638 décrit un système pour surveiller une concentration d'un analyte dans un échantillon de fluide ou de tissu. Le système comprend un module de capteur conçu pour être porté sur un patient. Le module capteur comprend une alimentation électrique adaptée pour fournir une puissance de transmission, un premier émetteur-récepteur adapté pour transmettre des informations de concentration d'analyte, et une mémoire. Le système comprend en outre un dispositif de surveillance à distance adapté pour communiquer sans fil avec le module capteur. Le dispositif de surveillance à distance comprend un second émetteur-récepteur adapté pour recevoir les informations de concentration d'analyte transmises par le module de capteur et adapté pour transmettre un signal au module de capteur confirmant que les informations de concentration d'analyte ont été reçues. Les informations sont stockées dans la mémoire jusqu'à ce que le signal soit reçu par le module capteur.

Ainsi, il existe un besoin pour de nouveaux procédés ou objets connectés pour optimiser la communication entre objet connecté et serveur de manière à simplifier les communications avec l'objet connecté ainsi qu'à réduire voire limiter le volume des données échangées.

### [Problème technique]

L'invention a pour but de remédier aux inconvénients de l'art antérieur. En particulier, l'invention a pour but de proposer un procédé de communication entre un objet connecté émetteur et un serveur, ledit procédé étant simple, peu chronophage, et permettant de limiter le nombre et le volume de données échangées. Le procédé selon l'invention permet d'optimiser la communication entre un ou plusieurs serveurs et un ou plusieurs objets connectés.

L'invention a en outre pour but de proposer un objet connecté émetteur, ledit objet connecté étant configuré pour émettre un message de données à destination d'un serveur, ledit objet connecté émetteur permettant de réduire le nombre de données échangées et d'améliorer la communication entre un objet connecté et un serveur.

### [Brève description de l'invention]

A cet effet, l'invention porte sur un procédé de communication de données entre un objet connecté émetteur et un serveur, ledit procédé comprenant :
- Une étape de collecte de données, par l'objet connecté émetteur, au moins une partie desdites données collectées étant destinée à être communiquée à un serveur,
- Une étape de comparaison, par un module de traitement de l'objet connecté émetteur, entre des données précédemment communiquées de l'objet connecté émetteur au serveur, et les données collectées afin de sélectionner de nouvelles données à communiquer au serveur, et
- Une étape d'émission, par un module de communication de l'objet connecté émetteur, d'un message de requête de communication à destination du serveur comportant les nouvelles données à communiquer au serveur;
caractérisé en ce que l'étape de comparaison comprend une étape d'identification de données ayant évolué depuis le dernier échange, lesdites nouvelles données à communiquer étant lesdites données ayant évolué.

La mise en oeuvre de ce procédé permet d'améliorer la communication entre objet connecté et serveur. En particulier, le procédé permet de réduire le nombre de données échangées et le volume de données échangées entre l'objet connecté émetteur et serveur. En effet, la comparaison avec des données précédemment communiquées entre l'objet connecté émetteur et le serveur permet que seules les nouvelles données, générées entre deux échanges, sont transmises. Cela permet de réduire le volume des données échangées entre l'objet connecté émetteur et le serveur. En outre, cela permet de réduire le temps de traitement du message sur le serveur ainsi que le volume de stockage de ces données sur le serveur. De plus, le fait que le traitement d'identification des données nouvelles soit fait au niveau des objets connectés et non du serveur, permet de soulager le serveur d'un traitement fréquent. Tout cela permet d'augmenter la scalabilité des échanges entre les objets connectés et leur serveur.

En outre, l'émission d'un message de requête de communication par l'objet connecté émetteur et dans certains modes de réalisation, le fait que cela soit l'objet connecté qui soit à l'initiative de la communication permet d'accroitre la sécurité de l'objet connecté. En effet, avantageusement, il peut dans ces conditions être configuré pour n'accepter aucune communication entrante ce qui limite les risques d'attaques malveillante et l'utilisation des IoTs dans des attaques par déni de service comme cela a été le cas dans le passé. De plus, dans ce contexte, l'objet connecté peut avantageusement être configuré pour, lorsqu'un serveur répond à l'objet connecté, accepter des informations ou avantageusement des instructions (e.g. paramétrage ou exécution de fonctionnalités) du serveur.

Ainsi, un procédé selon l'invention permet un gain de temps lors de la communication de données entre objet connecté émetteur et serveur et lors de leur traitement. Le procédé selon l'invention permet donc une communication plus fluide et efficace.

**Selon d'autres caractéristiques optionnelles du procédé, ce dernier peut inclure facultativement une ou plusieurs des caractéristiques suivantes, seules ou en combinaison :**
- les données collectées ont été générées par des capteurs ou ont été calculées à partir de données générées par des capteurs. L'invention est en effet particulièrement adaptée à la gestion de données de capteurs pouvant être mise à jour à fréquence élevée ou encore à des fréquences variables. Alternativement, les données collectées peuvent aussi correspondre à des données de sondes informatiques.
- les données collectées ont été générées à partir d'au moins deux capteurs, lesdits au moins deux capteurs présentant chacun une valeur de fréquence de génération de données, lesdits au moins deux capteurs étant configurés de façon à ce qu'un rapport entre lesdites valeurs de fréquences de génération de données soit au moins égal à 10. En effet, la présente invention est particulièrement avantageuse lorsqu'un objet connecté doit transmettre des données de capteurs présentant des fréquences de mise à jour très différentes.
- l'étape de collecte de données, par un objet connecté émetteur, comprend la collecte de données mises à jour. Ceci permet de réduire encore la quantité de données à traiter et ainsi d'améliorer le fonctionnement et d'assurer le bon déroulement du procédé de communication.
- l'étape de comparaison, par le module de traitement de l'objet connecté émetteur, comprend une étape d'identification des nouvelles données à communiquer au serveur sur la base d'un calcul différentiel entre les données collectées et des dernières données transmises. Cela permet d'identifier les nouvelles données à communiquer au serveur. Avantageusement, l'identification permet la sélection des données à transmettre au serveur ce qui évite donc la redondance des échanges ou encore de données échangées. Ainsi, l'identification des données permet de réduire le nombre et le volume de données échangées en évitant des échanges ayant déjà eu lieu, et donc par conséquence le nombre d'échange entre un objet connecté émetteur et un serveur.
- il comprend en outre une étape de mémorisation, par un module de stockage, des nouvelles données à communiquer au serveur. Cette étape de mémorisation peut permettre de stocker les nouvelles données à communiquer, le procédé est avantageusement implémenté avec les nouvelles données, ce qui facilite et simplifie la communication et les échanges de données tout en réduisant le volume et le nombre de données échangées. En outre, cela permet de disposer lors de l'envoi suivant des dernières données transmises. En particulier, lors de l'envoi de nouvelles données, ces nouvelles données viennent remplacer dans un référentiel de données transmises les dernières données transmises ou une partie des dernières données transmises.
- il comprend en outre une étape de chiffrement par l'objet connecté émetteur des nouvelles données à communiquer au serveur. L'étape de chiffrement permet notamment d'assurer la protection des données et la confidentialité des données. Ce qui permet au procédé d'être notamment fiable et sécurisé.
- le message de requête de communication à destination du serveur comporte également une clé de hachage, ladite clé de hachage étant générée par une fonction de hachage appliquée aux nouvelles données à communiquer au serveur. Cela est particulièrement avantageux dans le cas présent car étant donné que les données ne sont pas intégralement transmises le serveur ne peut vérifier que le message est complet.
- L'étape d'émission d'un message de requête de communication à destination du serveur est réalisée à l'initiative de l'objet connecté émetteur. En particulier, il ne comprend pas une étape initiale de configuration réseau pour ouvrir un accès pour le serveur à l'objet connecté émetteur, l'objet connecté émetteur étant configuré pour initier la communication avec le serveur. Ainsi, il n'est pas nécessaire de réaliser une configuration initiale du réseau lors de la mise en place de l'objet connecté permettant d'ouvrir des accès au réseau local de l'objet connecté émetteur pour le serveur. Ceci permet donc de simplifier la configuration du réseau (e.g. des passerelles) dans lequel se trouve l'objet connecté émetteur lors de son installation. En effet, le paramétrage d'une passerelle lors du déploiement des objets connectés peut être complexe (e.g. ajouter dans les règles de sécurités du système de protection une règle pour chaque paire objet connecté/serveur) alors que dans le cadre de la présente invention il est transparent pour les utilisateurs. L'intérêt de ce sens de communication est qu'il n'est pas nécessaire de configurer le réseau pour permettre l'échange de données entre l'objet connecté et le serveur. Ainsi, il n'est plus nécessaire de réaliser une configuration pour chaque communication, une seule configuration de l'objet connecté suffit. En outre, si le serveur est modifié il n'est pas utile de reconfigurer l'objet connecté, celui-ci se reconfigure automatiquement.
- Il comprend en outre une étape de réception, par l'objet connecté émetteur, de données communiquées par le serveur suite à la réception du message de requête de communication de l'objet connecté émetteur, lesdites données communiquées par le serveur comportant au moins une instruction de modification d'un paramètre de l'objet connecté émetteur ou au moins une instruction d'exécution d'une fonctionnalité de l'objet connecté émetteur. Cela permet d'instaurer une bidirectionnalité de la communication. Pour cela, l'objet connecté est avantageusement configuré pour pouvoir exécuter des instructions provenant du serveur en réponse à un message de données. Par ailleurs, de façon avantageuse, la clé de hachage permet de vérifier très rapidement la complétude du message et donc d'optimiser la communication.
- il comprend une étape d'initiation, par l'objet connecté émetteur, de la communication avec le serveur. Ceci permet en particulier de simplifier les communications, l'objet connecté émetteur étant configuré de sorte qu'il contacte le serveur avec lequel il veut communiquer.
- il comprend une étape d'émission, par l'objet connecté émetteur, d'un message d'initiation de communication. Ceci permet à l'objet connecté émetteur de contacter lui-même et directement le serveur.

D'autres mises en oeuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

L'invention porte en outre sur **un objet connecté émetteur** configuré pour collecter des données, au moins une partie desdites données étant destinées à être communiquées au serveur, ledit objet connecté émetteur comprenant :
- Un module de traitement configuré pour comparer des données précédemment communiquées de l'objet connecté émetteur au serveur, et les données collectées afin de sélectionner des nouvelles données à communiquer au serveur, et
- Un module de communication configuré pour émettre un message de requête de communication à destination du serveur comportant les nouvelles données à communiquer au serveur;
caractérisé en ce que ledit module de traitement réalise une identification de données ayant évolué depuis le dernier échange, lesdites nouvelles données à communiquer étant lesdites données ayant évolué.

L'objet connecté émetteur permet de réduire le nombre et le volume de données échangées et améliore la communication avec un serveur. L'objet connecté émetteur permet de réduire les échanges avec un serveur. Ceci permet également de réduire la consommation en ressource mais également la latence des échanges, les risques de dysfonctionnement et d'absence de transmission. Par ailleurs, grâce à l'objet connecté émetteur les échanges sont simplifiés et donc les capacités et les qualités des objets connectés et serveur sont augmentées.

Un objet connecté émetteur selon l'invention peut également être configuré pour initier une communication avec un serveur par l'émission d'un message de requête de communication, et configuré pour recevoir des informations émises par ledit serveur en réponse audit message de requête de communication. L'objet connecté émetteur permet d'initier la communication avec le serveur. Ceci permet de réduire le nombre et le volume de données échangées entre l'objet connecté et le serveur et donc les échanges entre un objet connecté émetteur et un serveur. L'objet connecté émetteur permet donc d'éviter la surcharge des réseaux et permet d'éviter la saturation. En outre, grâce à l'objet connecté émetteur selon l'invention la configuration de la communication est plus simple et moins chronophage. L'invention porte en outre sur programme informatique pour la communication entre un objet connecté et un serveur, comportant des instructions de code de programme pour la mise en oeuvre d'un procédé selon l'invention lorsque ledit programme informatique est exécuté sur un dispositif informatique.

L'invention porte également sur un serveur configuré pour recevoir au moins une partie de données collectées par un objet connecté émetteur selon l'invention. En particulier, l'invention porte sur un système informatique comportant un objet connecté émetteur selon l'invention et un serveur configuré pour recevoir au moins une partie de données collectées par l'objet connecté émetteur.

D'autres avantages et caractéristiques de l'invention apparaitront à la lecture de la description suivante donnée à titre d'exemple illustratif et non limitatif, en référence aux Figures annexées :
La figure 1 représente un schéma d'un premier mode de réalisation du procédé selon l'invention ;
La figure 2 représente un schéma d'un deuxième mode de réalisation du procédé selon l'invention ; les étapes encadrées par des pointillés sont facultatives ;
La figure 3 représente un schéma d'un troisième mode de réalisation du procédé selon l'invention ;
La figure 4 représente un schéma d'une architecture comprenant un objet connecté émetteur selon un mode de réalisation de la présente invention ;
La figure 5 représente un mode de réalisation de l'objet connecté émetteur selon l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

Ainsi, comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur objet connecté, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en oeuvre l'invention.

### [Description de l'invention]

On entend par « **objet connecté** » tout dispositif électronique apte à se connecter à un réseau de communication. Le réseau de communication peut être par exemple un réseau internet ou un réseau intranet. La connexion peut être réalisée par de nombreux moyens de communications tels que les connexions filaires ou les connexions sans fil (par exemple Wifi ou Bluetooth).

On entend par « **objet connecté émetteur** » au sens de l'invention un objet connecté apte à envoyer un message à un serveur, ledit message comportant des données telles que des données générées par des capteurs ou des sondes informatiques.

Au sens de l'invention « **message** » correspond à un message envoyé entre des objets connectés au travers d'au moins une passerelle ou entre objet connecté et passerelle ou encore entre objet connecté et dispositif ou logiciel et comprenant des données pouvant inclure des informations relatives à leur état et à celui de leur environnement. Le format de ces données peut par exemple correspondre à des fichiers, à des flux média (vidéo, son) ou encore à des valeurs codées.

On entend par « **message de requête de communication** » au sens de l'invention un message envoyé par un objet connecté au travers d'au moins une passerelle et comprenant des données d'un objet connecté et/ou d'une application de l'objet connecté souhaitant initier une communication avec un autre objet connecté tel qu'un serveur.

On entend par « **serveur de stockage** » un dispositif comportant une mémoire non transitoire et étant apte à se connecter à un réseau de communication.

On entend par « **instruction** » ou « **instruction informatique** », des données définissant une ou plusieurs actions pouvant être mises en oeuvre par un dispositif électronique.

On entend par « **connexion** » une communication, un accès, ou plus généralement une mise en relation entre deux ressources soumises à autorisation et conditions.

On entend par « **Hash** » le résultat d'une fonction de hachage. C'est une empreinte permettant d'identifier rapidement la donnée source. La fonction de hachage permet de réduire la taille d'un ensemble de données source par un procédé cryptographique et lui attribuer, une empreinte unique, un hash, qui ne peut correspondre qu'à cet ensemble particulier de données source. Par contre, il n'est pas possible à partir d'un hash de déduire l'ensemble des données sources.

On entend par « **échange de données** » au sens de l'invention une communication ou une transmission d'informations entre deux entités à l'aide de messages, de machine à machine.

On entend par « **volume de données** » la masse d'information échangée entre deux entités, de préférence entre l'objet connecté et le serveur.

On entend par « **nombre de données** » la concrétisation des données dans un système mathématique caractérisant par exemple un ensemble. Ainsi un nombre de données peut être compris comme une donnée, des dizaines de données, etc.... et pouvant alors définir un volume de données.

On entend par « **passerelle** » ou « **passerelle de connexion** » au sens de l'invention un équipement assurant la connexion entre des équipements appartenant à des réseaux ou sous-réseaux locaux différents, par exemple assurant la connexion entre des équipements d'un réseau d'objets connectés (adresses IP locales) et des services internet (adresses IP publiques). De ce fait, une telle passerelle possède deux types d'adresses IP. Son adresse IP publique, attribuée par le FAI, lui permet d'échanger les données avec le réseau Internet. Son adresse IP locale lui permet d'échanger des données avec les équipements de son sous-réseau local. Elle est généralement spécifique et attribuée par défaut par le FAI.

L'expression « **sous-réseau** » ou « **réseau local** » au sens de l'invention correspond par exemple à des réseaux locaux servis chacun par au moins une passerelle de connexion à un autre réseau tel qu'Internet et auxquels sont connectés des objets connectés.

Par l'expression « **directement connectée** » on désigne une connexion d'un objet connecté à la passerelle de connexion qui ne passe par aucune entité intermédiaire quelle qu'elle soit.

On entend par « **éloignée du seuil de variations déterminées** », une ou plusieurs valeurs présentant une différence de plus de 10 % de préférence de plus de 15 % et de manière encore plus préférée de plus de 20 % avec ledit seuil de variations

On entend par « **proche du seuil de variations déterminées** », une ou plusieurs valeurs présentant une différence de moins de 15 % de préférence de moins de 10 % et de manière encore plus préférée de moins de 5 % avec ledit seuil de variations.

Par « **intervalle temporel** » au sens de l'invention on entend un espace-temps, limité dans le temps entre deux instants. Un intervalle de temps peut correspondre à un ou plusieurs jours, une ou plusieurs semaines, un ou plusieurs mois, une ou plusieurs années, mais aussi à des périodes plus courtes telles qu'une ou plusieurs heures. De préférence un intervalle temporel comprend un indicateur de début et de fin accompagné d'une durée ou bien un intervalle temporel comprend un indicateur de début ou de fin, l'indicateur étant accompagné d'une durée.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, tel qu'un ordinateur, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en oeuvre l'invention.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc... tout agencement matériel et logiciel apte à permettre l'exécution d'instructions.

Par « **sonde** » ou « **sonde informatique** », on entend au sens de l'invention un logiciel associé à un équipement qui permet d'effectuer, de gérer et de faire remonter vers un équipement informatique des mesures, des valeurs de paramètres, des données de connectivité etc....

On entend par « **ressources** » au sens de l'invention l'aptitude d'un objet connecté à réaliser, faire, ou mettre en oeuvre une fonctionnalité. Par exemple il peut s'agir d'une fonction de stockage, d'un code, d'un programme ou sous-programme, une séquence d'instructions mais également de ressource physique telle que mémoire, CPU, disque, capteurs.

Dans les revendications, le terme "**comprendre**" ou "**comporter**" n'exclut pas d'autres éléments ou d'autres étapes.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec d'autres dispositifs et plus particulièrement avec des serveurs. En outre, il existe de plus en plus d'objets connectés et d'applications d'objet connecté qui présentent une grande diversité et variabilité. Ainsi, les communications ne cessent de croître sur les réseaux de communication. Par ailleurs, les objets connectés ou les applications d'objets connectés ont des besoins de communications tout aussi variés, dont les fréquences de communication peuvent aller d'une simple communication ponctuelle à des communications récurrentes. Cela est d'autant plus vrai avec la multiplication des capteurs configurés pour envoyer, sur requête de serveurs centraux, l'ensemble des données générées ou l'ensemble des données relatives à leur état courant. Selon les cas, cela peut représenter des centaines voire des milliers de données qu'il faut régulièrement envoyer sur le serveur pour refléter l'état des différents capteurs, ressources etc... de l'objet connecté. Du fait du nombre de données et la fréquence des échanges cela peut rapidement représenter un volume de données conséquent d'autant plus que le serveur peut être associé à une multitude d'objets connectés.

De façon à éviter une saturation des réseaux et d'optimiser la remontée d'information en provenance d'objets connectés vers un serveur centralisé en vue de leur traitement, les inventeurs ont développé une solution basée sur la réduction du volume de données échangées entre un objet connecté et un serveur. En particulier, selon la solution développée par les inventeurs, l'IoT conserve, par exemple dans un référentiel de données, les dernières informations ou données qu'il a pu transmettre avec succès au serveur qui lui est associé. Lors de la prochaine communication avec ce serveur, il compare les données à transmettre avec celles qu'il a transmise lors du dernier échange avec succès. Cette comparaison lui permet d'identifier les données ayant évoluées depuis cet échange et donc les nouvelles données à transmettre au serveur. Il est alors configuré pour ne transmettre que ces nouvelles données au serveur. Si cette transmission se passe correctement, il met à jour son référentiel de données pour le prochain échange avec le serveur.

En outre, comme cela sera détaillé, l'objet connecté émet un message de requête de communication à destination d'un serveur. Ainsi, c'est avantageusement l'objet connecté qui initie la communication avec le serveur. Cela permet d'augmenter la sécurité de l'objet connecté émetteur sans pour autant réduire les possibilités d'interaction entre le serveur et l'objet connecté. Cela est possible notamment grâce à la possibilité offerte au serveur d'envoyer en réponse au message de l'objet connecté émetteur des informations dont éventuellement des instructions.

Ainsi, selon **un premier aspect** l'invention porte sur **un procédé de communication 1** de données entre un objet connecté émetteur et un serveur, ledit objet connecté émetteur étant configuré pour émettre un message de requête de communication à destination du serveur.

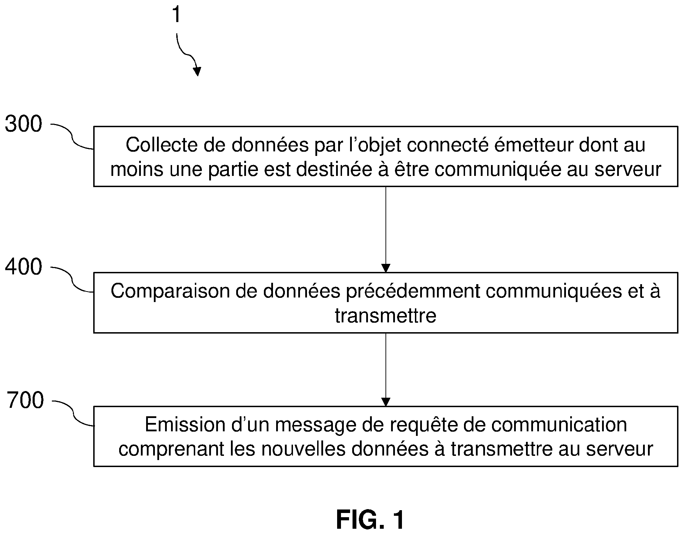

Comme présenté à la **figure 1**, un mode de réalisation du procédé de communication selon l'invention comprend une étape de collecte de données 300, une étape de comparaison de données 400, et une étape d'émission d'un message de données 700.

Il est à noter que l'invention ne se limite pas à ce mode de réalisation, et qu'il serait aisé pour l'homme du métier de comprendre que l'invention peut comporter un ou plusieurs réseaux de communication, un ou plusieurs objets connectés, un ou plusieurs serveurs. Ainsi l'invention n'est pas limitée par son architecture ni par son agencement, ni par le nombre de composants (objets connectés, serveurs, réseaux, passerelles de communications).

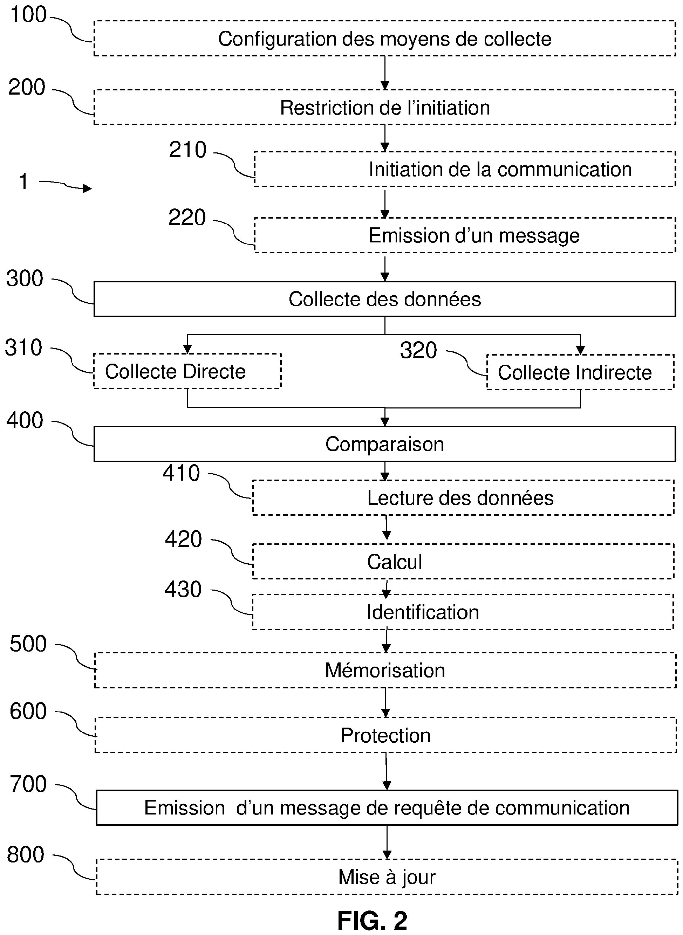

Avantageusement, un procédé de communication 1, selon un mode de réalisation de l'invention illustré à **la** **figure 2****,** peut comprendre une étape de configuration des moyens de collecte 100, une étape de restriction de l'initiation de la communication 200, une étape d'initiation de la communication 210, une étape d'émission d'un message 220, une étape de collecte directe des données 310, une étape de collecte indirecte des données 320, une étape de lecture des données 410, une étape de calcul 420, une étape d'indentification des nouvelles données à communiquer au serveur 430, une étape de mémorisation 500, une étape de protection 600 et/ou une étape de mise à jour 800.

Les objets connectés et de manière préférée l'objet connecté émetteur peuvent chacun se connecter avec différents objets connectés au travers de réseaux locaux ou d'un réseau distant, par exemple un réseau de transport de donnée tel qu'Internet, par l'intermédiaire de leurs passerelles de connexion. En particulier, les passerelles de connexion sont adaptées pour établir une connexion avec une passerelle de connexion du réseau de transport de données. Cette connexion peut, par exemple, utiliser une technologie filaire, comme la technologie Ethernet, ou une technologie sans fil, comme la technologie 4G ou la technologie WiMax. Les passerelles de connexion peuvent établir différents types de liaison de communication, entre passerelles et/ou entre réseaux.

Chaque passerelle de connexion peut être directement connectée à une pluralité d'objets connectés auquel elle appartient. En particulier, une passerelle de connexion peut être directement connectée avec l'objet connecté émetteur.

En outre, l'homme du métier appréciera que les différents objets connectés qui sont directement connectés à une passerelle de connexion sont, de fait, également connectés entre eux via ladite passerelle de connexion. Enfin, chaque objet connecté est susceptible d'établir d'autres connexions, c'est-à-dire d'autres liaisons de communication, avec d'autres objets connectés qui ne sont pas directement connectés à la même passerelle de connexion.

De manière générale, dans des réseaux d'objets connectés, chaque passerelle de connexion utilise une ou plusieurs interfaces de communication qui lui sont propres pour communiquer avec les objets connectés qui lui sont directement connectés. Il peut, par exemple, s'agir d'une interface Ethernet, d'une interface WIFI, d'une interface Bluetooth, d'une interface RF433 ou encore d'une interface IrDA. L'homme du métier appréciera que les modes de réalisation d'une passerelle de connexion dans laquelle l'invention peut être mise en oeuvre ne sont limités ni par le nombre ni par le type ou la nature des interfaces de connexion qui sont supportées.

En résumé, les passerelles de connexion assurent le routage de données, et en particulier de messages, entre les différents objets connectés et les réseaux. Les objets connectés et par exemple plusieurs familles d'objets connectés peuvent ainsi être interconnectés par l'intermédiaire d'un réseau de transport de données. En outre, ces passerelles de connexion sont aussi adaptées pour assurer le routage de messages, par leur intermédiaire, d'un objet connecté émetteur qui leur est connecté, directement ou non, à un objet connecté destinataire ou un serveur qui est connecté à une autre passerelle de connexion de l'infrastructure réseau.

Tel qu'illustré à **la** **figure 2****,** un procédé de communication 1 selon un mode de réalisation de l'invention peut comprendre **une étape préalable de restriction** de l'initiation de la communication 200 par l'objet connecté émetteur. En effet, dans le cadre de l'invention, l'objet connecté peut être à l'initiative de la communication avec le serveur. Ainsi, il n'est pas nécessaire de réaliser une configuration du réseau permettant d'ouvrir des accès au réseau local de l'objet connecté émetteur pour le serveur. C'est avantageusement l'objet connecté émetteur qui contacte le serveur par un message de requête de communication et ce dernier pourra utiliser sa réponse au message de requête de communication de l'objet connecté émetteur pour lui communiquer des informations et éventuellement des commandes à réaliser. Ceci permet donc de simplifier la configuration de l'objet connecté émetteur notamment lors de l'initiation de la communication.

Cette étape de restriction peut comprendre **une étape d'initiation de la communication 210 avec le serveur.** Avantageusement, cette étape est mise en oeuvre par l'objet connecté émetteur. Ceci permet une mise en place de la communication à l'initiative exclusive de l'objet connecté émetteur. Par exemple, une initiation de la communication peut être mise en oeuvre par l'objet connecté émetteur au travers de passerelles de communications entre le réseau local de l'objet connecté émetteur et un réseau distant. En outre, de façon préférée, l'objet connecté émetteur peut être configuré pour n'accepter aucune communication entrante à l'exception des réponses du serveur 2 aux messages de requête de communication envoyé par l'objet connecté émetteur IoT1.

Avantageusement, le procédé ne comprend pas d'étape de configuration réseau pour ouvrir un accès à l'objet connecté émetteur. L'objet connecté émetteur est configuré pour initier une communication avec le serveur.

En effet, le procédé selon l'invention permet en particulier de simplifier les communications, l'objet connecté émetteur étant configuré de sorte qu'il contacte le serveur avec lequel il veut communiquer.

Dans l'art antérieur, une configuration du réseau permet d'attribuer un port dédié au serveur afin que celui-ci puisse communiquer avec l'objet connecté. En effet, lorsqu'une communication entrante doit être établie, il apparait nécessaire de configurer le réseau (box, firewall, ...) pour que la communication entrante soit acceptée. La communication entrante une fois acceptée est alors redirigée vers un port spécifique afin de rediriger la communication entrante sur une adresse locale, correspondant de préférence à celle de l'équipement. Par opposition, la communication sortante, c'est-à-dire sortant de l'équipement ne nécessite pas de configuration.

Cette configuration est chronophage complexe et ne permet pas de simplifier les échanges et le nombre et volume de données communiquées entre un serveur et un objet connecté. En effet, l'objet connecté doit attendre d'être contacté afin de pouvoir échanger avec le serveur. Ce qui augmente le nombre et le volume de données communiquées entre l'objet connecté émetteur et le serveur qui est déjà important et vient donc surcharger d'autant plus les réseaux et la communication. En outre, ceci peut augmenter les dysfonctionnements.

Ainsi, un procédé selon l'invention peut également comprendre une étape d'émission 220, de préférence par l'objet connecté émetteur, d'un message d'initiation de communication. De préférence, ce message d'initiation de communication est à destination du serveur. En effet, c'est l'objet connecté émetteur qui contacte directement le serveur en utilisant son réseau et plus particulièrement les moyens de communication entre l'objet connecté émetteur et le serveur tel que les passerelles de communication.

Le procédé selon l'invention peut comprendre **une étape de collecte de données 300.** De préférence, l'étape de collecte de données peut être mise en oeuvre par l'objet connecté émetteur IoT1.

Une étape de collecte de données peut comprendre généralement la réception de données par l'objet connecté émetteur IoT1 ou la récupération et le rassemblement de données par l'objet connecté émetteur IoT1. Les données collectées sont destinées à être communiquées de préférence en partie, au serveur.

L'étape de collecte permet de centraliser des données sur l'objet connecté émetteur. De préférence, ces données peuvent correspondre à des données de l'objet connecté émetteur mais également à des données d'autres objets connectés interconnectés avec l'objet connecté émetteur, au travers d'une ou plusieurs passerelles de connexion. Ceci permet donc de limiter les échanges à un seul objet connecté, de préférence l'objet connecté émetteur. Avantageusement, cela permet également de centraliser les communications avec un seul objet connecté, ce qui réduit d'autant plus le nombre et le volume de données échangées avec un serveur.

Ainsi, selon un mode de réalisation de l'invention, l'étape de collecte peut comprendre une **collecte directe des données 310.** Une collecte directe de données peut être réalisée directement par l'objet connecté émetteur. L'étape de collecte de données permet de réunir des données par exemple des données d'authentification échangées entre l'objet connecté et le serveur, des données de commandes à réaliser, des données d'état, des données d'état de fonctionnement. Ces données peuvent par ailleurs se rapporter à un ou plusieurs serveurs, à un ou plusieurs objets connectés, à une ou plusieurs familles d'objets connectés, à un ou plusieurs capteurs, à une ou plusieurs ressources. Avantageusement, les données collectées peuvent avoir été générées par des capteurs ou peuvent avoir été calculées à partir de données générées par des capteurs.

Alternativement, il peut d'agir d'un seul capteur.

Selon une autre alternative, les données collectées peuvent avoir été générées à partir d'au moins deux capteurs. En outre, chacun des deux capteurs peut présenter une valeur de fréquence de génération de données et un rapport entre les valeurs de fréquences de génération de données est au moins égal à 5 et de manière préférée au moins égal à 10. Des tels capteurs présentent alors des fréquences de génération de données très différentes et la mise en oeuvre de la présente invention est alors très avantageuse.

Des capteurs peuvent correspondre à tous type de dispositif configuré pour capter ou détecter ou encore recueillir une ou plusieurs données qu'il peut transformer, convertir, analyser, représenter ou encore mesurer en une autre donnée réutilisable ou signal correspondant. De préférence le ou les capteurs sont couplés à au moins un objet connecté.

Les données peuvent comporter en outre au moins : un identifiant, un statut, une origine, un propriétaire initial, des caractéristiques physiques, des fonctionnalités ou des permissions. Par ailleurs, il peut s'agir de données structurées ou non structurées ou encore semi-structurées, qualitatives ou quantitatives.

Les données peuvent être collectées en continue ou selon une fréquence prédéfinie. De préférence, les données sont collectées selon une fréquence prédéfinie afin de préserver les ressources, et de limiter les échanges. Avantageusement, cela permet aussi de contribuer à une communication optimisée pour objets connectés. Ainsi, une fréquence prédéfinie peut par exemple correspondre à des intervalles configurables de temps de façon à obtenir des informations par type de donnée en fonction du temps. Plus particulièrement, une fréquence prédéfinie peut correspondre par exemple à des mesures réalisées à une fréquence supérieure ou égale à dix seconde, de préférence supérieure ou égale à cinq minutes, de façon plus préférée supérieure ou égale à une heure. A noter que toutes les données ne seront pas nécessairement collectées à une fréquence identique. Ces données collectées peuvent être stockées dans une mémoire ou tout autre support, par exemple référentiel de stockage, une table de données, un Lac de stockage (ou « Data Lake » en terminologie anglosaxonne).

Alternativement, l'étape de collecte de données, par l'objet connecté émetteur, peut comprendre une étape de collecte indirecte des données 320. Une collecte indirecte de données peut être réalisée indirectement par l'objet connecté émetteur par exemple par un moyen de collecte de données. Une étape de collecte indirecte des données peut par exemple correspondre à une étape intermédiaire avant la réception des données par l'objet connecté émetteur. Ainsi, un dispositif intermédiaire peut permettre à l'objet connecté émetteur de collecter des données. Une étape de collecte indirecte des données peut donc comprendre un dispositif intermédiaire ou un moyen de collecte permettant de collecter les données et de les transmettre à l'objet connecté émetteur. Il peut s'agir d'un moyen de collecte de l'objet connecté émetteur tel qu'un module de collecte distant, de sondes, de capteurs, de logiciels ou programmes, d'applications, configurés pour collecter des données et les transmettre à l'objet connecté émetteur.

Dans un exemple particulier, des sondes peuvent permettre de collecter des données. La ou les sondes permettent par exemple de collecter des données sur l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et la consommation électrique, des données d'authentification, des données de commandes à réaliser, des données d'état etc...

Il existe de nombreux types de sondes, et l'homme du métier sera en capacité de déterminer quel type de sonde pourra faire remonter vers un équipement informatique des mesures ou des valeurs. Ainsi, à titre d'exemple il peut s'agir de toute instruction exécutable capable de fournir des valeurs telle qu'une sonde de type « Dynatrace », « AppDynamics », « Nigel's Monitor » (Nmon) ou « Performance Monitor » (Perfmon). Par ailleurs les langages de programmation supportés peuvent être multiples et variés. Les sondes « Dynatrace » ou « Appdynamics » permettent par exemple l'accès à des données pertinentes sur l'état d'une application. Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collecter » en anglais) pour les applications J2EE (pour « Java Enterprise Edition » en anglais).

Ces sondes peuvent être associées à chaque donnée pour remonter les informations vers l'objet connecté émetteur. En outre, les sondes peuvent être associées à un type de données et définir un identifiant par type de données. La ou les sondes peuvent suivre en continu ou à des intervalles configurables les données de façon à obtenir des informations par type de donnée en fonction du temps. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les données ne seront pas nécessairement mesurées à une fréquence identique. Ces données et informations peuvent être stockées dans une mémoire.

Dans certains modes de réalisation, un objet connecté émetteur selon l'invention comporte une interface homme-machine 5 permettant de définir les sondes qui remontent les données d'objets connectés ou plus largement de dispositifs informatiques.

Ainsi, le procédé selon l'invention peut comporter **une étape préalable facultative de configuration 100** du ou des moyens de collectes ou de l'objet connecté émetteur.

L'étape de configuration 100 peut comprendre la définition des données à collectées et/ou la définition de seuils correspondant par exemple à des valeurs minimales et/ou maximales de données à collecter ou encore à la définition d'une fréquence pour collecter les données. Ces informations peuvent être inscrites dans un fichier de configuration (par exemple pour chaque objet connecté, capteur et/ou pour chaque ressource). En outre, il peut par exemple s'agir de la définition préalable à la réalisation du procédé, d'indicateurs pertinents. Ces indicateurs pertinents peuvent être définis pour la surveillance des données. Ainsi, la configuration permet de définir des indicateurs pertinents pour la surveillance de données afin de paramétrer les données à surveiller. Avantageusement, la configuration permet d'éviter de surcharger l'objet connecté lors de la collecte de données. En effet, grâce à la configuration d'indicateurs pertinents, seules les données nécessaires seront surveillées et collectées. De plus, la configuration permet d'assurer des indicateurs pertinents pouvant être référencés par exemple dans un référentiel.

Le procédé selon l'invention peut comprendre **une étape de comparaison 400** entre des données précédemment communiquées de l'objet connecté émetteur au serveur 2, et les données collectées. De préférence, l'étape de comparaison 400 permet de sélectionner des nouvelles données à communiquer au serveur. De préférence, l'étape de comparaison est réalisée par un module de traitement de l'objet connecté émetteur.

De façon avantageuse, les données précédemment communiquées correspondent à des données qui ont déjà été échangées entre l'objet connecté émetteur et le serveur. De préférence, entre le même objet connecté émetteur et le même serveur. De manière préférée, il s'agit des dernières données précédemment communiquées, c'est-à-dire, qui corresponde aux données les plus récemment échangées entre l'objet connecté émetteur et le serveur, c'est-à-dire envoyée par l'objet connecté émetteur (IoT1) au serveur.

L'étape de comparaison peut comprendre **une étape de lecture 410** des données collectées et des données précédemment communiquées entre l'objet connecté émetteur et le serveur.

L'étape de lecture peut être réalisée par le module de traitement de l'objet connecté émetteur. Cette étape de lecture permet de façon avantageuse de lire uniquement les dernières données précédemment communiquées. Ceci se traduit par un gain de temps lors de la communication et une réduction de l'utilisation des ressources. Ceci contribue également à simplifier le procédé de communication. Ainsi, l'étape de comparaison peut ne prendre en compte que les dernières données échangées. De façon tout aussi avantageuse, ces données précédemment communiquées sont mémorisées. Il peut s'agir d'une mémorisation comprenant uniquement les dernières données échangées ce qui permet de réduire les espaces de stockage. Alternativement, il peut s'agir de l'ensemble des données précédemment échangées avec le serveur. Toutefois dans ce cas, une étape de tri peut être réalisée afin de classer les données précédemment communiquées. Ainsi, ces données précédemment communiquées peuvent être triées selon une échelle de temps, de préférence chronologique. De cette manière la mémorisation des données précédemment communiquées présente en priorité les dernières données précédemment communiquées. Suite à la lecture des données ou en parallèle de la lecture des données, l'étape de comparaison peut comprendre **une étape de calcul différentiel 420.** Cette étape de calcul permet de déterminer des variations entre les données précédemment communiquées et les données collectées. Avantageusement, cette étape de calcul peut être mise en oeuvre par le module de traitement de l'objet connecté émetteur.

De façon avantageuse, un seuil de variations peut être déterminé de sorte que plus une variation entre les données précédemment communiquées et les données collectées est grandes, i.e. éloignée du seuil de variations déterminé, plus les données précédemment communiquées sont différentes des données collectées. Inversement, plus une variation entre les données précédemment communiquées et les données collectées est faibles, i.e. proche du seuil de variations déterminé, plus les données précédemment communiquées sont identiques aux données collectées.

Ceci permet par exemple d'obtenir des données comparées correspondant à des nouvelles données à communiquer au serveur. Ces nouvelles données à communiquer au serveur correspondent alors de préférence aux données collectées dont la variation est supérieure au seuil de variation déterminé.

Avantageusement, l'étape de comparaison peut comprendre **une étape d'identification des nouvelles données à communiquer au serveur 430.** L'identification peut être réalisée par le module de traitement de l'objet connecté émetteur.

L'étape d'identification permet d'identifier les nouvelles données à communiquer au serveur. Avantageusement, l'identification permet la sélection des données dont la variation avec le seuil de variation est supérieure à 10 %, de préférence supérieure à 15 % et de manière encore plus préférée supérieure à 20 %.

Ainsi, l'étape d'identification peut permettre d'identifier des données ayant évoluées entre les précédents échanges, afin d'optimiser les communications entre l'objet connecté émetteur et serveur. Il peut par exemple s'agir de l'identification de nouvelles données, de données modifiées par rapport à un échange précédent, de données actualisées par rapport à un échange précédent.

Alternativement, cela peut correspondre à des données présentant les mêmes valeur mais indiquant ainsi qu'une valeur n'a pas été modifiée entre deux mesures.

Ainsi, l'étape de comparaison permet d'optimiser et d'améliorer la communication entre objets connectés et serveurs. En effet, le nombre de données échangées entre objets connectés et serveur est réduit ; ce qui simplifie la communication entre objet connecté et serveur et permet de réduire la surcharge réseau.

Le procédé selon l'invention peut comprendre **une étape de mémorisation 500,** des nouvelles données à communiquer au serveur. De préférence cette étape peut être mise en oeuvre par un module de stockage. Le module de stockage peut être une partie intégrante de l'objet connecté émetteur ou bien distant de l'objet connecté émetteur.

De manière avantageuse, l'étape de mémorisation permet de stocker les nouvelles données à communiquer. De préférence, cela permet une mémorisation des dernières données échangées qui seront utilisées lors d'une comparaison ultérieure lors d'un échange futur entre l'objet connecté et le serveur. Ainsi, le procédé est avantageusement implémenté avec les nouvelles données, ce qui facilite et simplifie la communication et les échanges de données. De même, ceci permet de réduire le volume et le nombre de données échangées ainsi que le nombre de données mémorisées.

Alternativement, l'étape de mémorisation peut comprendre le stockage des nouvelles données à communiquer au serveur et des données précédemment communiquées au serveur avant l'étape de comparaison.

Ceci permet de garantir le bon fonctionnement du procédé selon l'invention. En effet, les données étant sauvegardées, cela permet de prévenir d'un dysfonctionnement dans les échanges. Par exemple, si une donnée n'a pas été transmise ou retransmise au serveur.

Selon une autre alternative, l'étape de mémorisation peut contribuer à la mise en oeuvre, selon un mode de réalisation particulier, d'une étape de suppression de données redondantes au sein par exemple du module de stockage. Cela permet d'éviter la saturation du module de stockage et de réduire le coût des ressources. En outre, ceci permet également de simplifier le procédé et de réduire le volume et le nombre de données.

Le procédé selon l'invention peut comprendre en outre **une étape de protection des nouvelles données 600** à communiquer au serveur. De préférence cette étape peut être mise en oeuvre par l'objet connecté émetteur. Cette étape permet notamment d'assurer la protection des données et la confidentialité des données par tout moyen de chiffrement.

Par exemple, afin d'assurer la protection des données, l'objet connecté émetteur peut disposer d'une clef publique du serveur avec lequel il communique. Il peut alors utiliser cette clef pour chiffrer les données qu'il transmet afin d'assurer que seul le serveur destinataire puisse déchiffrer les données qu'il reçoit. Ainsi, une étape de chiffrement des nouvelles données à communiquer au serveur peut être mise en oeuvre par l'objet connecté émetteur. En outre, afin d'assurer l'intégrité des données, une clef de hachage peut être également transmise lors des échanges. Par exemple, le message de requête de communication à destination du serveur peut également comporter une clé de hachage. Cette clé de hachage peut être générée par une fonction de hachage appliquée aux nouvelles données à communiquer au serveur.

Ces étapes peuvent être mises en oeuvre de manière connue en soi par l'homme de l'art. Ainsi, l'étape de protection des nouvelles données permet avantageusement au procédé d'assurer des échanges fiables, sécurisés et certains.

Le procédé selon l'invention peut comprendre **une étape d'émission 700** d'un message de requête de communication. De préférence l'étape d'émission est mise en oeuvre par un module de communication de l'objet connecté émetteur. Ce message de requête de communication comprend avantageusement les nouvelles données. Ces nouvelles données sont les données à communiquer au serveur. Ainsi, le message de données est à destination du serveur. En particulier, le message de requête de communication ne comporte pas de données collectées ayant déjà été transmises au serveur 2.

Avantageusement, ce message comportant les nouvelles données peut être mémorisé lors de l'étape de mémorisation ultérieure.

En outre, les nouvelles données pourront être utilisées lors d'une future étape de collecte de données afin de réduire les données échangées entre l'objet connecté émetteur et le serveur.

Le procédé selon l'invention peut également comprendre une étape de réception, de préférence par l'objet connecté émetteur, de données communiquées par le serveur 2. De préférence cette étape de réception fait suite à la réception du message de requête de communication de l'objet connecté émetteur IoT1.

Les données communiquées par le serveur peuvent comporter au moins une instruction de modification d'un paramètre de l'objet connecté émetteur IoT1 ou au moins une instruction d'exécution d'une fonctionnalité de l'objet connecté émetteur IoT1.

Le procédé selon l'invention peut comprendre **une étape de mise à jour 800,** des nouvelles données à communiquer au serveur. De préférence, l'étape de mise à jour peut être mise en oeuvre par l'objet connecté émetteur.

En effet, l'étape de comparaison est soumise à la bonne mémorisation des données échangées. Ceci permet par exemple d'éviter d'échanger des données déjà communiquées entre le serveur et l'objet connecté, d'éviter d'engorger les réseaux, d'éviter tous les dysfonctionnements liés à un volume ou un nombre de données important ou de participer à la bonne implémentation du module de stockage. En outre, l'étape de mise à jour permet également d'assurer le bon fonctionnement et déroulement du procédé de communication. Ainsi le procédé est fiable.

Avantageusement, l'étape de mise à jour peut être définie selon une fréquence prédéterminée dans le temps. Par exemple toutes les heures. L'étape de mise à jour peut également être définie selon une fréquence d'échange. Par exemple tous les trois échanges entre le même objet connecté émetteur et le même serveur.

Ainsi, en se référant à nouveau à l'étape de collecte de données, par l'objet connecté émetteur, cette étape de collecte de données peut comprendre **une collecte de données mises à jour.** Ainsi ces données collectées ont été mises à jour depuis le précédent échange, ce qui permet d'assurer une optimisation de la communication pour réduire le volume et le nombre de données échangées, ainsi que le nombre d'échange entre objets connectés et serveur.

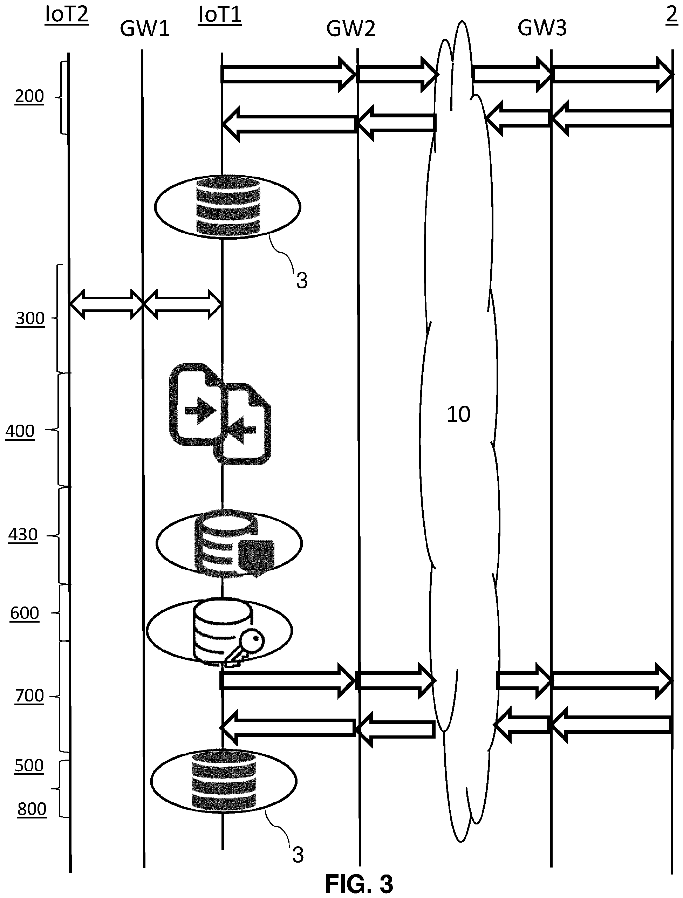

Un exemple de mise en oeuvre de la présente invention est illustré à la **figure 3****.**

Cet exemple peut illustrer un procédé de communication 1 permettant d'optimiser la remontée d'information en provenance d'une pluralité d'éoliennes IoT2 couplées à un analyseur de production IoT1 sur un serveur 2 centralisé en vue de leur traitement.

Les objets connectés peuvent communiquer au travers de sous réseaux locaux pouvant être interconnectés entre eux grâce, par exemple, à l'Internet 10 et des passerelles de connexion GW1, GW2, GW3. En effet, dans un grand nombre de cas, il est nécessaire de centraliser sur un ou plusieurs serveurs les données d'une famille d'objet connecté afin de permettre par exemple de les consulter ou de déclencher des opérations de maintenance.

Comme cela a été décrit, le procédé selon l'invention peut permettre une simplification de la configuration d'un objet connecté émetteur loT1

Cette simplification comporte par exemple une restriction de l'initiation de la communication 200 à l'analyseur de production loT1. En effet dans ce type de cas, il n'est pas nécessaire de réaliser une configuration réseau permettant d'ouvrir les accès depuis l'extérieur du réseau local de l'objet connecté. C'est donc l'analyseur de production IoT1 qui contacte le serveur 2 de préférence par l'intermédiaire d'une passerelle de connexion GW2, GW3, le serveur pourra quant à lui utiliser sa réponse au message de requête de l'analyseur de production IoT1 pour lui communiquer des informations ou des commandes à réaliser.

Par exemple, lors d'une première phase de configuration, l'analyseur de production IoT1 peut envoyer au serveur 2 un premier message de requête de communication comportant des données montrant une initiation de la production électrique. Dans ces conditions, la réponse du serveur peut comporter des commandes de paramétrage et notamment de paramétrage de la fréquence d'envoi des messages de requête de communication. Ainsi, un analyseur de production IoT1, initialement configuré pour faire remonter des données de capteurs seulement toutes les minutes, peut être configuré pour envoyer des messages de requêtes de communication toutes les secondes ou moins, de façon à permettre une interaction en quasi-temps réel entre le serveur 2 et l'analyseur de production IoT1. Ainsi, si un administrateur souhaite intervenir à distance (dans le cadre d'une configuration ou d'une reconfiguration), il est possible de configurer un objet connecté émetteur selon l'invention pour qu'il devienne interactif grâce à l'envoi de message de requête de communication à une fréquence prédéterminée (e.g. inférieure à 1 sec). Cela permet à l'administrateur d'avoir une interaction fluide avec l'objet connecté. Ensuite l'objet connecté pourra être configuré, toujours par l'intermédiaire de réponse du serveur au message de requête de communication, pour revenir à une autre fréquence classique prédéterminée.

Cela est particulièrement pertinent dans le cadre de la configuration initiale des objets connectés durant laquelle un opérateur connecté au serveur souhaite être en mesure de rapidement configurer les objets connectés à distance sans pour autant souhaiter configurer un accès réseau depuis le serveur vers l'objet connecté. En outre, il est également possible toujours par l'intermédiaire de réponse du serveur au message de requête de communication de commander à l'analyseur de production IoT1 d'initier une mise à jour de ses logiciels ou micrologiciels. Après une phase de configuration, l'analyseur de production IoT1 pourra revenir à une fréquence classique d'envoi de message de requête de communication, comportant les nouvelles données. Cela permet une forte économie de communication réseau et en particulier sur le long terme. Cela permet également des économies du côté du serveur pour lequel une infrastructure informatique réduite peut être attribuée. En outre, comme il y a moins de message de requête de communication à traiter, cela permet également une meilleure scalabilité. Enfin, comme mentionné, la sécurité de l'analyseur de production IoT1 contre des attaques réseau est renforcée.

En outre, le procédé de communication selon l'invention a pour objet de réduire le volume et le nombre de données échangées entre l'analyseur de production IoT1 et le serveur 2. Ces échanges ont souvent pour objet de donner l'état courant dans lequel se trouve l'analyseur de production IoT1, une pluralité d'éolienne IoT2 ou encore de sondes informatiques ou de capteurs couplés auxdits objets connectés IoT1 IoT2. Selon les cas, cela peut représenter des centaines voire des milliers de données qu'il faut régulièrement envoyer sur le serveur 2 pour refléter l'état des différents capteurs, ressources etc... des éoliennes IoT2 et/ou l'analyseur de production IoT1.

Ainsi, comme illustré à la figure 3, afin de limiter le nombre et le volume de données échangé ainsi que le nombre d'échange, l'analyseur de production IoT1 peut conserver dans une table de données 3 les dernières informations qu'il a pu transmettre avec succès au serveur 2 qui lui est associé.

Ainsi, après une phase de collecte 300 de données, l'analyseur de production IoT1 compare 400 les données à transmettre avec celles transmises lors du dernier échange avec succès.

Cette comparaison 400 lui permet d'identifier 430 les données ayant évoluées depuis cet échange. En outre, en réduisant la transmission des données à uniquement celle qui ont été modifiées, la consommation de la bande passante est fortement limitée mais également les consommations de ressources côtés serveurs ce qui traduit par ailleurs une optimisation du traitement des messages (mémoire et CPU) mais également du stockage (seulement les nouvelles données sont stockées).Afin d'assurer la confidentialité des données et la protection des données, l'analyseur de production dispose de la clef publique du serveur avec lequel il communique. Il utilise cette clef pour chiffrer 600 les données qu'il doit transmettre afin de s'assurer que seul le serveur destinataire puisse décrypter les données reçues.

Une fois les données chiffrées, l'analyseur de production transmet 700 au serveur 2 uniquement les données ayant évolué depuis le dernier échange.

En réponse à cette transmission de données, intégrées au message de requête de communication, le serveur 2 peut envoyer des instructions de paramétrage de l'analyseur de production loT1 ou encore des instructions d'exécution de fonctions.

Par exemple, en cas d'identification d'un possible risque de défaillance d'une ou de plusieurs des éoliennes IoT2, le serveur 2 peut commander à l'analyseur de production IoT1 d'augmenter la fréquence de collecte des données de capteurs d'usure pour les passer de seulement toutes les 24 heures à toutes les 10 minutes. En outre, le serveur peut donner instruction à l'analyseur de production IoT1 d'initier une séquence de test pour l'analyse des composants des éoliennes d'identification d'une source possible du risque de défaillance.

Enfin, si la transmission 700 se passe correctement, l'objet connecté émetteur IoT1 met à jour 800 sa table de données 3 pour le prochain échange avec le serveur 2.

Selon **un autre aspect**, l'invention concerne **un objet connecté** configuré pour émettre un message de données à destination d'un serveur.

**Un objet connecté** émetteur selon l'invention peut être apte à, de préférence configuré pour initier une communication avec un serveur par l'émission d'un message de requête de communication.

En outre, un objet connecté émetteur au sens de l'invention peut être apte à, de préférence configuré pour, recevoir des informations émises par le serveur en réponse audit message de requête de communication.

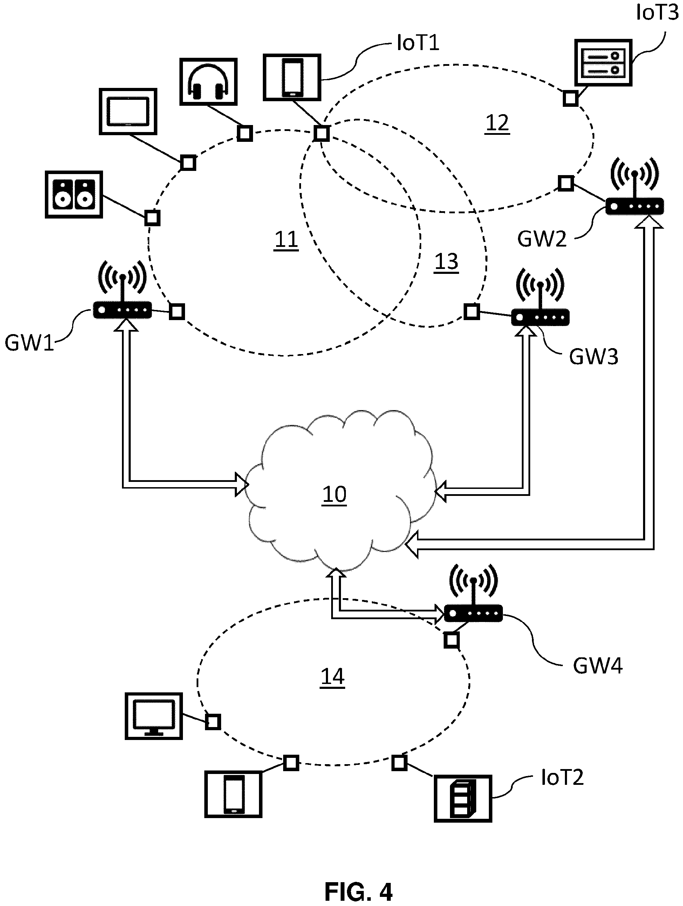

En référence au schéma de **la** **figure 4**, une architecture de réseaux locaux à laquelle un procédé conforme à l'invention peut avantageusement s'appliquer, est illustré. En outre, une telle architecture peut comprendre un objet connecté émetteur au sens de la présente invention. Une architecture réseaux peut comprendre plusieurs sous-réseaux tels que par exemple un premier sous-réseau 11, un deuxième sous réseau 12 et un troisième sous réseau 13 distincts auxquels est connecté un objet connecté émetteur IoT1, ces sous-réseaux étant connectés chacun au réseau principal ou réseau de transport de données 10. Le réseau principal 10 dans l'exemple représenté, est le réseau Internet. Le réseau principal 10 étant lui-même connecté à un sous réseau 14.

Dans l'exemple représenté à la figure 4, le sous-réseau 11 comprend au moins **une passerelle de connexion**, comme la passerelle GW1 de connexion à Internet. De même, les sous-réseaux 12, 13, 14 comprennent chacun au moins une passerelle de connexion comme les passerelles de connexion GW2, GW3, et GW4 de l'exemple représenté. En particulier, dans l'exemple représenté et décrit par la suite, la passerelle GW3 permet d'accéder à un réseau de type LTE tandis que la passerelle GW2 est un accès satellite. Les passerelles permettent le transport de données entre diverses entités physiques ou virtuelles par exemple entre des objets connectés distincts appartenant à des sous-réseaux différents ou à un même sous-réseau pouvant alors former une ou plusieurs familles d'objets connectés, mais aussi entre un ou plusieurs sous-réseaux et Internet ou encore avec le dispositif de partage. Dans certains cas, un sous-réseau peut comporter plus d'une passerelle de connexion.

Chacun des réseaux locaux 11, 12, 13 et 14, comprend **un ou plusieurs objets connectés.** Une pluralité d'objets connectés peut correspondre à au moins un objet connecté, à deux objets connectés, à des dizaines, à des centaines voire à des milliers d'objets connectés ; chacun ayant une puissance de traitement qui lui est propre, des exigences de qualité de service, différents types de données ayant un débit différent et par conséquent différents besoin en bande passante pour communiquer avec un serveur sans porter préjudice à la qualité de service. Chaque objet connecté présente également ses propres ressources, capteurs, fonctions, fonctionnalités et capacités De manière non-limitative, ces objets connectés peuvent être : un téléphone portable connecté, une tablette connectée, un ordinateur portable connecté, des enceintes connectées, un casque audio connecté, une caméra connectée, un serveur, un capteur, une installation solaire, une station météo, un réfrigérateur connecté, une imprimante connectée, un périphérique virtuel tel qu'une application, des dispositifs commerciaux ou domotiques, tels que des systèmes de gestion d'énergie et de ressource etc.... L'invention n'entend pas être limitée, ni par le nombre ni par la nature des objets ainsi connectés aux sous-réseaux 11, 12, 13 et 14. Il peut s'agir de tout objet électronique associé à un objet physique, lieu ou personne identifiés. Chaque objet est identifié par un code individuel unique qui le distingue de tous les autres au sein du réseau local concerné, par exemple un code-barre, un code EAN (« European Article Numbering » selon une terminologie anglo-saxonne), un code EPC (« Electronic Product Code » selon une terminologie anglo-saxonne), etc,.

On notera que l'identification des objets suit une tendance lourde, dans le contexte de l'émergence de l'IoT, vers l'attribution d'une adresse IP unique propre à chaque objet connecté. C'est pourquoi, dans ce qui suit, on considérera en tant que de besoin que l'identifiant unique de chaque objet connecté de chaque sous-réseau est une adresse IP. Ceci n'est toutefois pas un prérequis des modes de mise en oeuvre d'un procédé conforme à l'invention. En effet, l'interface entre les objets connectés des réseaux locaux et d'autres sous réseaux ou le réseau Internet, dont les connexions sont des connexions IP, est assurée par les passerelles GW1, GW2, GW3 et GW4 montrées à la figure 4, qui peuvent gérer une conversion ou correspondance d'adresses entre un espace d'adressage quelconque d'un sous-réseau d'une part, et l'espace d'adressage IP d'un réseau principal (e.g. internet) d'autre part.

**Les sous-réseaux** 11, 12, 13 et 14 peuvent être des réseaux spécifiquement dédiés aux objets connectés comme par exemple un réseau Sigfox ; un réseau LoRa utilisant le protocole LoRaWAN (acronyme de « Long Range Wide-area Network » selon une terminologie anglo-saxonne) qui comme son nom l'indique est un réseau étendu à longue portée ; un réseau LPWA ou LPWAN ou bien des réseaux basés sur un autre protocole sans fil, ou filaire, y compris par des réseaux optiques par ondes radio comme par exemple :
- un réseau à dimension personnelle (ou WPAN, de l'anglais « Wireless Personal Area Networks ») comme un réseau ZigBee basé sur la norme IEEE 802.15.4 ;
- un réseau Wi-Fi ;ou un réseau Bluetooth (norme IEEE 802.15.1) ; etc.

- ou bien un réseau cellulaire, LTE/LTE-A 4G ou 5G.

Les objets connectés peuvent également fonctionner avec l'utilisation de protocole d'application réseau tel que le protocole d'application contraint (CoAP). Les IoTs peuvent également être intégrés à des périphériques coordinateurs fournissant une chaîne de liens formant une arborescence de périphériques et de réseaux.

En particulier, comme cela est représenté dans la figure 4, un des objets connectés IoT1 est capable de se connecter aux trois sous-réseaux 11, 12, 13 disposant chacun d'une passerelle de connexion. Ainsi, l'objet connecté IoT1 dispose de plusieurs sous réseaux pour communiquer avec Internet par l'intermédiaire de passerelle de connexion, et chaque loT de chaque sous-réseau peut communiquer avec Internet.

Ainsi, tel qu'illustré à la figure 4 un objet connecté IoT1 peut correspondre à un objet connecté émetteur au sens de l'invention. Un objet connecté IoT2 tel qu'illustré sur la figure 4 peut correspondre à un serveur au sens de l'invention.

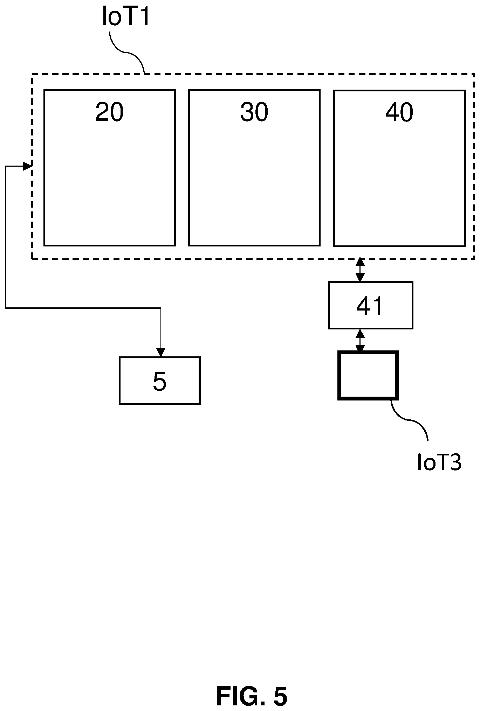

En outre, un objet connecté émetteur IoT1, tel que représenter à la **figure 5**, peut être apte à, de préférence configuré pour émettre un message de données. De préférence ce message de données est à destination du serveur. Ce message de données peut par exemple permettre d'initier la communication avec le serveur. Un tel message peut par exemple correspondre à un message de requête de communication avec le serveur. L'objet connecté émetteur peut être apte à, de préférence configuré pour restreindre l'initiation de la communication. Ainsi, l'objet connecté émetteur peut permettre de limiter l'initiation de la communication, ce qui permet de réduire le nombre de communication. L'objet connecté peut être apte à, de préférence configuré pour initier la communication avec le serveur. Ce qui permet une mise en place de la communication à l'initiative exclusive de l'objet connecté émetteur. Ainsi, l'objet connecté émetteur peut permettre de simplifier la configuration, c'est-à-dire qu'il n'est pas utile d'ouvrir un accès depuis l'extérieur du réseau local pour initier une communication avec le serveur.

Avantageusement, l'objet connecté émetteur est apte à, de préférence configuré pour, collecter des données. Ces données peuvent correspondre aux données de l'objet connecté émetteur IoT1 et/ou à des données d'objets connectés IoT3 appartenant ou non au même sous réseaux que l'objet connecté émetteur. Ainsi, l'objet connecté émetteur peut être apte à, de préférence configuré pour réceptionner des données. En outre, au moins une partie des données collectées sont destinées à être communiquées à un serveur IoT2. De préférence les données sont transmises par les passerelles de connexion telles que la passerelle de connexion GW1, GW2 et/ou GW3 et GW4.

Un objet connecté émetteur IoT1 selon l'invention peut comprendre **un module de traitement 20.**

Un module de traitement peut être apte à, de préférence configuré pour comparer des données précédemment communiquées entre l'objet connecté émetteur et le serveur, et les données collectées. Cela permet de sélectionner des nouvelles données à communiquer au serveur.

Le module de traitement peut être avantageusement configuré pour observer, surveiller contrôler ou autrement gérer les divers objets connectés qui peuvent communiquer avec lui. Un module de traitement au sens de l'invention peut également être apte à, de préférence configuré pour lire des données précédemment communiquées entre l'objet connecté émetteur et le serveur. Ceci permet de réduire l'utilisation des ressources, un gain de temps et de simplifier le fonctionnement de l'objet connecté émetteur.

En effet, ceci permet avantageusement de lire les dernières données précédemment communiquées.

En outre, le module de traitement peut être configuré pour calculer des variations entre les données précédemment communiquées et les données collectées. Ceci permet d'identifier des nouvelles données. Ainsi, le module de traitement peut être avantageusement, configuré pour identifier des nouvelles données à communiquer au serveur. Cette identification permet ainsi la sélection des données à communiquer au serveur. Ce qui permet d'optimiser et d'améliorer les communications entre objets connectés, objet connecté émetteur et serveur. Un objet connecté émetteur IoT1 selon l'invention peut comprendre **un module de communication 30.** Un module de communication est apte à, de préférence configuré pour, émettre un message de données à destination du serveur comportant les nouvelles données à communiquer au serveur.

Un objet connecté émetteur IoT1 peut comporter **un module de stockage 40** apte à, de préférence configurée pour, mémoriser des données collectées par l'objet connecté émetteur IoT1. Un module de stockage peut par exemple correspondre à une mémoire de données. Avantageusement, le module de stockage 40 est également apte à, de préférence configuré pour mémoriser les nouvelles données. Ainsi le module de stockage peut être configuré pour mémoriser des données associées à chaque objet connecté et objet connecté émetteur et mémoriser chacune des nouvelles données de chaque objet connecté et objet connecté émetteur.

Le module de stockage peut être également apte à, de préférence configuré pour mémoriser et associer à chaque donnée un identifiant ainsi que le protocole de communication de l'objet connecté.

En outre, le module de stockage peut être apte à, de préférence configuré pour, supprimer des données redondantes au sein de son espace de stockage.

Par exemple, un module de stockage peut comprendre un référentiel de données sous forme de liste ou de table. Chaque liste ou table peut associer un identifiant IoT, un protocole de communication, et les données.

Un module de stockage peut avantageusement comporter une section non effaçable, physiquement isolée ou simplement agencée pour qu'un accès en écriture ou en effacement soit proscrit.

Un module de stockage peut en outre être agencé pour enregistrer les données collectées par des sondes 41 lorsque les données sont collectées par un moyen de collecte 41.

Par ailleurs, la mémoire de donnée peut être locale, distante et/ou partagée. Il peut s'agir de n'importe quel support lisible connu dans l'art, par exemple une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques, d'une mémoire programmable, effaçable, flash ou toutes autres mémoires permettant le stockage selon une durée prédéterminée ou non. En outre, il peut également s'agir de tout support de stockage de type disque dur, CD-ROM, disque amovible ou tout autre support de stockage connu.

De façon avantageuse, la mémoire peut être mise à jour afin d'améliorer et perfectionner la communication entre l'objet connecté émetteur et le serveur.

En outre, l'objet connecté émetteur peut comprendre **une interface homme-machine 5.** L'IHM, comme déjà abordé, peut être utilisée pour permettre la transmission de paramètres à l'objet connecté émetteur. En outre, l'interface homme machine peut permettre la mise à disposition de l'utilisateur des valeurs des données mesurées ou calculées par l'objet connecté émetteur. De façon générale, l'IHM est couplée de manière communicative avec un processeur et elle comprend une interface de sortie utilisateur et une interface d'entrée utilisateur.

L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

Ainsi, l'interface homme-machine, au sens de l'invention, correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

## Revendications

1. Procédé de communication (1) de données entre un objet connecté émetteur (loT1) et un serveur (2), ledit procédé comprenant :
- une étape de collecte de données (300), par un objet connecté émetteur (IoT1), au moins une partie desdites données collectées étant destinée à être communiquée à un serveur (2),
- une étape de comparaison (400), par un module de traitement (20) de l'objet connecté émetteur (IoT1), entre des données précédemment communiquées de l'objet connecté émetteur (IoT1) au serveur (2), et les données collectées afin de sélectionner de nouvelles données à communiquer au serveur, et
- une étape d'émission (700), par un module de communication (30) de l'objet connecté émetteur (IoT1), d'un message de requête de communication à destination du serveur (2) comportant les nouvelles données à communiquer au serveur (2) ;
**caractérisé en ce que** l'étape de comparaison (400) comprend une étape (430) d'identification de données ayant évolué depuis le dernier échange, lesdites nouvelles données à communiquer étant lesdites données ayant évolué.

2. Procédé de communication (1) selon la revendication 1, **caractérisé en ce que** les données collectées ont été générées par des capteurs ou ont été calculées à partir de données générées par des capteurs.

3. Procédé de communication (1) selon la revendication 1, **caractérisé en ce que** les données collectées ont été générées à partir d'au moins deux capteurs, lesdits au moins deux capteurs présentant chacun une valeur de fréquence de génération de données, lesdits au moins deux capteurs étant configurés de façon à ce qu'un rapport entre lesdites valeurs de fréquences de génération de données soit au moins égal à 5.

4. Procédé de communication (1) selon la revendication 1, **caractérisé en ce que** l'étape de collecte de données, par un objet connecté émetteur (IoT1), comprend la collecte de données mises à jour (800).

5. Procédé de communication (1) selon l'une des revendications 1 à 4, **caractérisé en ce que** l'étape de comparaison (400), par le module de traitement (20) de l'objet connecté émetteur (loT1), comprend une étape d'identification des nouvelles données à communiquer au serveur (2) sur la base d'un calcul différentiel entre les données collectées et des dernières données transmises.

6. Procédé de communication (1) selon l'une des revendications 1 à 5, **caractérisé en ce qu'**il comprend en outre une étape de mémorisation (500), par un module de stockage (40), des nouvelles données à communiquer au serveur.

7. Procédé de communication (1) selon l'une quelconque des revendications précédentes **caractérisé en ce qu'**il comprend en outre une étape de chiffrement par l'objet connecté émetteur (IoT1) des nouvelles données à communiquer au serveur (2).

8. Procédé de communication (1) selon l'une quelconque des revendications précédentes, **caractérisé en ce que** le message de requête de communication à destination du serveur (2) comporte également une clé de hachage, ladite clé de hachage étant générée par une fonction de hachage appliquée aux nouvelles données à communiquer au serveur (2).

9. Procédé de communication (1) selon l'une quelconque des revendications précédentes, **caractérisé en ce que** l'étape d'émission (700) d'un message de requête de communication à destination du serveur (2) est réalisée à l'initiative de l'objet connecté émetteur (IoT1).

10. Procédé de communication (1) selon la revendication précédente, **caractérisé en ce qu'**il comprend en outre une étape de réception, par l'objet connecté émetteur (IoT1), de données communiquées par le serveur (2) suite à la réception du message de requête de communication de l'objet connecté émetteur (IoT1), lesdites données communiquées par le serveur comportant au moins une instruction de modification d'un paramètre de l'objet connecté émetteur (IoT1) ou au moins une instruction d'exécution d'une fonctionnalité de l'objet connecté émetteur (IoT1).

11. Procédé de communication (1), selon l'une quelconque des revendications précédentes, **caractérisé en ce qu'**il comprend une étape d'initiation (210), par l'objet connecté émetteur, de la communication avec le serveur (2).

12. Procédé de communication (1), selon l'une des revendications précédentes, **caractérisé en ce qu'**il comprend une étape d'émission (220), par l'objet connecté émetteur, d'un message d'initiation de communication.

13. Programme informatique pour la communication entre un objet connecté et un serveur, comportant des instructions de code de programme pour la mise en oeuvre d'un procédé selon les revendications 1 à 12 lorsque ledit programme informatique est exécuté sur un dispositif informatique.

14. Objet connecté émetteur (IoT1) configuré pour collecter des données, au moins une partie desdites données étant destinées à être communiquées à un serveur (2), ledit objet connecté émetteur (IoT1) comprenant :
- un module de traitement (20) configuré pour comparer des données précédemment communiquées de l'objet connecté émetteur (IoT1) au serveur (2), et les données collectées afin de sélectionner des nouvelles données à communiquer au serveur (2), et
- un module de communication (30) configuré pour émettre un message de requête de communication à destination du serveur (2) comportant les nouvelles données à communiquer au serveur ;
**caractérisé en ce que** ledit module de traitement réalise une identification de données ayant évolué depuis le dernier échange, lesdites nouvelles données à communiquer étant lesdites données ayant évolué.

15. Système informatique comportant un objet connecté émetteur (loT1) selon la revendication précédente et un serveur configuré pour recevoir au moins une partie de données collectées par l'objet connecté émetteur (IoT1).

## Patentansprüche

1. Verfahren (1) zum Kommunizieren von Daten zwischen einem verbundenen Sendeobjekt (IoT1) und einem Server (2), das Verfahren umfassend:
- einen Schritt (300) zum Erfassen von Daten durch ein verbundenes Sendeobjekt (IoT1), wobei mindestens ein Teil der erfassten Daten dazu bestimmt ist, an einen Server (2) kommuniziert zu werden,
- einen Schritt (400) zum Vergleichen, durch ein Verarbeitungsmodul (20) des verbundenen Sendeobjekts (loT1), zwischen Daten, die zuvor von dem verbundenen Sendeobjekt (IoT1) an den Server (2) kommuniziert wurden, und den erfassten Daten, um neue Daten auszuwählen, die an den Server kommuniziert werden sollen, und
- einen Schritt (700) zum Senden, durch ein Kommunikationsmodul (30) des verbundenen Sendeobjekts (IoT1), einer Kommunikationsanforderungsnachricht an den Server (2), die die neuen Daten aufweist, die an den Server (2) kommuniziert werden sollen;
**dadurch gekennzeichnet, dass** der Vergleichsschritt (400) einen Schritt (430) zum Identifizieren von Daten umfasst, die sich seit dem letzten Austausch weiterentwickelt haben, wobei die neuen Daten, die kommuniziert werden sollen, die Daten sind, die sich weiterentwickelt haben.

2. Kommunikationsverfahren (1) nach Anspruch 1,
**dadurch gekennzeichnet, dass** die erfassten Daten durch Sensoren erzeugt wurden oder aus Daten berechnet wurden, die durch Sensoren erzeugt werden.

3. Kommunikationsverfahren (1) nach Anspruch 1,
**dadurch gekennzeichnet, dass** die erfassten Daten aus mindestens zwei Sensoren erzeugt wurden, wobei die mindestens zwei Sensoren jeweils einen Datenerzeugungshäufigkeitswert vorweisen, wobei die mindestens zwei Sensoren so konfiguriert sind, dass ein Verhältnis zwischen den Datenerzeugungshäufigkeitswerten mindestens gleich 5 ist.

4. Kommunikationsverfahren (1) nach Anspruch 1,
**dadurch gekennzeichnet, dass** der Schritt zum Erfassen von Daten, durch ein verbundenes Sendeobjekt (IoT1), das Erfassen aktualisierter Daten (800) umfasst.

5. Kommunikationsverfahren (1) nach einem der Ansprüche 1 bis 4,
**dadurch gekennzeichnet, dass** der Vergleichsschritt (400), durch das Verarbeitungsmodul (20) des verbundenen Sendeobjekts (IoT1), einen Schritt zum Identifizieren neuer Daten, die an den Server (2) kommuniziert werden sollen, auf der Basis einer Differentialrechnung zwischen den erfassten Daten und den zuletzt übertragenen Daten umfasst.

6. Kommunikationsverfahren (1) nach einem der Ansprüche 1 bis 5,
**dadurch gekennzeichnet, dass** es ferner einen Schritt (500) zum Speichern, durch ein Speichermodul (40), der neuen Daten umfasst, die an den Server kommuniziert werden sollen.

7. Kommunikationsverfahren (1) nach einem der vorstehenden Ansprüche, **dadurch gekennzeichnet, dass** es ferner einen Schritt zum Verschlüsseln, durch das verbundene Sendeobjekt (IoT1), der neuen Daten umfasst, die an den Server (2) kommuniziert werden sollen.

8. Kommunikationsverfahren (1) nach einem der vorstehenden Ansprüche, **dadurch gekennzeichnet, dass** die Kommunikationsanforderungsnachricht an den Server (2) auch einen Hash-Schlüssel umfasst, wobei der Hash-Schlüssel durch eine Hash-Funktion erzeugt wird, die auf die neuen Daten angewendet wird, die an den Server (2) kommuniziert werden sollen.

9. Kommunikationsverfahren (1) nach einem der vorstehenden Ansprüche, **dadurch gekennzeichnet, dass** der Schritt (700) zum Senden einer Kommunikationsanforderungsnachricht an den Server (2) auf Initiative des verbundenen Sendeobjekts (IoT1) ausgeführt wird.

10. Kommunikationsverfahren (1) nach dem vorstehenden Anspruch,
**dadurch gekennzeichnet, dass** es ferner einen Schritt zum Empfangen, durch das verbundene Sendeobjekt (IoT1), von Daten, die durch den Server (2) kommuniziert werden, nach dem Empfangen der Kommunikationsanforderungsnachricht des verbundenen Sendeobjekts (IoT1) umfasst, wobei die Daten, die durch den Server kommuniziert werden, mindestens eine Anweisung zum Ändern eines Parameters des verbundenen Sendeobjekts (IoT1) oder mindestens eine Anweisung zum Durchführen einer Funktionalität des verbundenen Sendeobjekts (IoT1) umfassen.

11. Kommunikationsverfahren (1) nach einem der vorstehenden Ansprüche, **dadurch gekennzeichnet, dass** es einen Schritt (210) zum Einleiten, durch das verbundene Sendeobjekt, der Kommunikation mit dem Server (2) umfasst.

12. Kommunikationsverfahren (1) nach einem der vorstehenden Ansprüche, **dadurch gekennzeichnet, dass** es einen Schritt (220) zum Senden, durch das verbundene Sendeobjekt, einer Kommunikationseinleitungsnachricht umfasst.

13. Computerprogramm für die Kommunikation zwischen einem verbundenen Sendeobjekt und einem Server, das Programmcodeanweisungen zum Implementieren eines Verfahrens nach einem der Ansprüche 1 bis 12 aufweist, wenn das Programm auf einer Computervorrichtung durchgeführt wird.

14. Verbundenes Sendeobjekt (IoT1), das zum Erfassen von Daten konfiguriert ist, wobei mindestens ein Teil der Daten dazu bestimmt ist, an einen Server (2) kommuniziert zu werden, das verbundene Sendeobjekt (IoT1) umfassend:
- ein Verarbeitungsmodul (20), das zum Vergleichen von Daten, die zuvor von dem verbundenen Sendeobjekt (IoT1) an den Server (2) kommuniziert wurden, und den erfassten Daten konfiguriert ist, um neue Daten auszuwählen, die an den Server (2) kommuniziert werden sollen, und
- ein Kommunikationsmodul (30), das zum Senden einer Kommunikationsanforderungsnachricht an den Server (2) konfiguriert ist, die die neuen Daten aufweist, die an den Server kommuniziert werden sollen;
**dadurch gekennzeichnet, dass** das Verarbeitungsmodul eine Identifizierung von Daten ausführt, die sich seit dem letzten Austausch weiterentwickelt haben, wobei die neuen Daten, die kommuniziert werden sollen, die Daten sind, die sich weiterentwickelt haben.

15. Computersystem, das ein verbundenes Sendeobjekt (IoT1) nach dem vorstehenden Anspruch und einen Server umfasst, der zum Empfangen mindestens eines Teils der Daten konfiguriert ist, die durch das verbundene Sendeobjekt (IoT1) erfasst werden.

## Claims

1. Communication method (1) for communicating data between a transmitting smart object (IoT1) and a server (2), said method comprising:
- a collection step (300) for collecting data, by means of a transmitting smart object (IoT1), at least part of said collected data being intended to be communicated to a server (2),
- a comparison step (400) for comparing, by means of a processing module (20) of the transmitting smart object (IoT1), data previously communicated from the transmitting smart object (IoT1) to the server (2) with the collected data in order to select new data to be communicated to the server, and
- a transmission step (700) for transmitting, by means of a communication module (30) of the transmitting smart object (IoT1), a communication request message to the server (2) containing the new data to be communicated to the server (2);
**characterized in that** the comparison step (400) comprises a step (430) of identifying data that have changed since the last exchange, said new data to be communicated being said data that have changed.

2. Communication method (1) according to claim 1, **characterized in that** the collected data have been generated by sensors or have been calculated from data generated by sensors.

3. Communication method (1) according to claim 1, **characterized in that** the collected data have been generated from at least two sensors, said at least two sensors each having a data generation frequency value, said at least two sensors being configured such that a ratio between said data generation frequency values is at least equal to 5.

4. Communication method (1) according to claim 1, **characterized in that** the step of collecting data, by means of a transmitting smart object (IoT1), comprises the collection of data which have been updated (800).

5. Communication method (1) according to one of claims 1 to 4, **characterized in that** the comparison step (400) for comparing, by means of the processing module (20) of the transmitting smart object (IoT1), comprises a step of identifying the new data to be communicated to the server (2) on the basis of a differential calculation between the collected data and last transmitted data.

6. Communication method (1) according to one of claims 1 to 5, **characterized in that** it further comprises a step (500) of storing, by means of a storage module (40), the new data to be communicated to the server.

7. Communication method (1) according to any one of the preceding claims, **characterized in that** it further comprises a step of encrypting, by means of the transmitting smart object (IoT1), the new data to be communicated to the server (2).

8. Communication method (1) according to any one of the preceding claims, **characterized in that** the communication request message to the server (2) also contains a hash key, said hash key being generated by a hash function applied to the new data to be communicated to the server (2).

9. Communication method (1) according to any one of the preceding claims, **characterized in that** the step (700) of transmitting a communication request message to the server (2) is carried out at the initiative of the transmitting smart object (IoT1).

10. Communication method (1) according to the preceding claim, **characterized in that** it further comprises a step of receiving, by means of the transmitting smart object (IoT1), data communicated by the server (2) following receipt of the communication request message from the transmitting smart object (IoT1), said data communicated by the server containing at least one instruction to modify a parameter of the transmitting smart object (IoT1) or at least one instruction to execute a functionality of the transmitting smart object (IoT1).

11. Communication method (1) according to any one of the preceding claims, **characterized in that** it comprises a step (210) of initiating communication with the server (2), by means of the transmitting smart object.

12. Communication method (1) according to one of the preceding claims, **characterized in that** it comprises a step (220) of transmitting, by means of the transmitting smart object, a message to initiate communication.

13. Computer program for communication between a smart object and a server, comprising program code instructions for implementing a method according to claims 1 to 12 when said computer program is executed on a computing device.

14. Transmitting smart object (IoT1) configured to collect data, at least part of said data being intended to be communicated to a server (2), said transmitting smart object (IoT1) comprising:
- a processing module (20) configured to compare data previously communicated from the transmitting smart object (IoT1) to the server (2) and the collected data in order to select new data to be communicated to the server (2), and
- a communication module (30) configured to transmit a communication request message to the server (2) containing the new data to be communicated to the server;
**characterized in that** said processing module identifies data that have changed since the last exchange, said new data to be communicated being said data that have changed.

15. Computer system comprising a transmitting smart object (IoT1) according to the preceding claim and a server configured to receive at least part of the data collected by the transmitting smart object (IoT1).
